# EUROPEAN PATENT APPLICATION

(11) **EP 4 654 350 A1**
(43) Date of publication of application: **26.11.2025**
(21) Application number: 24176857.1
(22) Date of filing: 20.05.2024
(51) Int. Cl.: H01M 50/209, H01M 50/249, H01M 50/271

(54) **A BATTERY HOUSING WITH VENTILATION CHANNEL ISOLATING BATTERY CELLS FROM EACH OTHER**

(71) Applicant: VOLVO TRUCK CORPORATION, 405 08 Göteborg (SE)
(72) Inventor: DEVARA MANE, Manjunath, 418 32 GÖTEBORG (SE); TINGBERG, Tobias, 435 39 MÖLNLYCKE (SE)
(74) Representative: Kransell & Wennborg KB

(57) **Abstract**

The present disclosure relates to a battery housing, comprising at least one pair of battery cells, the battery cells being arranged side by side and spaced apart from each other by a geometric gap, a top cover having an inner surface facing in a direction towards the battery cells, the inner surface being arranged at a distance from the at least one pair of battery cells, and an elongated spacer element extending from the inner surface of the top cover and into the geometric gap between the battery cells, wherein a first ventilation channel is formed by the spacer element and the top cover, the first ventilation channel comprising a first outlet in the housing towards an ambient environment.

## Description

### TECHNICAL FIELD

The disclosure relates generally to vehicle batteries. In particular aspects, the disclosure relates to a vehicle housing comprising ventilation channels to isolate battery cells from each other. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Thermal runaway in battery packs for vehicles refers to a chain reaction of escalating heat generation within the battery cells. This process can be triggered by factors like overcharging, internal short circuits, physical damage, etc. As the temperature rises, it can lead to a chain reaction, causing neighboring cells to become part in the thermal event, potentially leading to gas and particle release for these neighboring cells. Managing this runaway reaction is important to prevent severe damage to the battery pack, vehicle, and surrounding environment.

In the event of a thermal runaway, efficient management of hot gases and particles within the battery pack may prevent rapid thermal spread. Strategically designed chimneys within the pack can be utilized to guide and channel hot gases and to trap particles, ensuring controlled pathways that inhibit thermal propagation and limit the acceleration of the runaway process. Vents positioned within the pack may be set to open at specific pressures, enabling the release of accumulated hot gases. Meanwhile, trapping mechanisms are deployed at designated locations within the pack to contain and prevent particles from exiting. This containment mitigates the risk of these particles igniting external gases, reducing potential hazards outside the battery pack. Accordingly, it is desirable to provide improved battery housing designs for mitigating damage caused by a thermal runaway event.

### SUMMARY

According to a first aspect of the disclosure, there is provided a battery housing, comprising: at least one pair of battery cells, the battery cells being arranged side by side and spaced apart from each other by a geometric gap, a top cover having an inner surface facing in a direction towards the battery cells, the inner surface being arranged at a distance from the at least one pair of battery cells, and an elongated spacer element extending from the inner surface of the top cover and into the geometric gap between the battery cells, wherein a first ventilation channel is formed by the spacer element and the top cover, the first ventilation channel comprising a first outlet in the housing towards an ambient environment.

The first aspect of the disclosure may seek to at least partly reduce damages in a battery pack when one of the battery cells is exposed to thermal runaway. A technical benefit may include that the battery cells are more or less isolated from each other by the elongated spacer element extending to the inner surface of the top cover. Hereby, in the case of thermal runaway in one of the battery cells, there is a reduced risk that e.g. heat, particles and radiation is spread to adjacent battery cells of the battery pack. Instead, gas and particles can be directed through the first ventilation channel and out to the ambient environment at the first outlet.

Optionally in some examples, including in at least one preferred example, the battery housing comprises a second ventilation channel formed by the spacer element and the top cover, the first and second ventilation channels being arranged on opposite sides of the spacer element. A technical benefit may include that a ventilation channel is formed on a respective side of the spacer element.

Optionally in some examples, including in at least one preferred example, the second ventilation channel comprises a second outlet in the housing towards the ambient environment, the second outlet being an outlet different from the first outlet. Hence, the second outlet is an outlet other than, or separate from, the first outlet. A technical benefit may include that a potential thermal runaway in a second battery cell can be directed to the ambient environment at the second outlet.

Optionally in some examples, including in at least one preferred example, the first and second ventilation channels are sealed from each other. A technical benefit may include that a still further reduced risk that heat, particles and radiation is spread from a cell exposed to thermal runaway to an adjacent cell.

Optionally in some examples, including in at least one preferred example, the battery housing comprises a first side wall and a second side wall, the elongated spacer element extending from the first side wall to the second side wall. The elongated spacer element may hereby completely seal the first ventilation channel from an adjacent ventilation channel.

Optionally in some examples, including in at least one preferred example, the first outlet is arranged in the first side wall. A technical benefit may include that potential thermal runaway is exhausted to the ambient environment at an end portion of the first ventilation channel.

Optionally in some examples, including in at least one preferred example, the first ventilation channel comprises an additional first outlet arranged in the second side wall. A technical benefit may include that a pair of outlets is provided. Gas and particles can hereby rapidly be exhausted to the ambient environment in case of thermal runaway. In addition, using a pair of outlets may be advantageous for battery cells of substantial length, and/or for batter housings accommodating one row of battery cells.

Optionally in some examples, including in at least one preferred example, each of the battery cells extends between the first and second side walls. A technical benefit may include that a single row of battery cells is provided.

Optionally in some examples, including in at least one preferred example, the top cover and the elongated spacer element are formed in one piece and made by same type of material. A technical benefit may include that a single piece component is provided. This can simplify production and assembly, as well as reduce cost and enable for improved sealing between the elongated spacer element and the top cover.

Optionally in some examples, including in at least one preferred example, the top cover is made by a metal material. A technical benefit may include that a metal material may enable for an improved blocking of particles spreading outside the top cover.

Optionally in some examples, including in at least one preferred example, the spacer element is made by a metal material. A technical benefit may include that a metal material may enable for an improved blocking of particles spreading between cells.

Optionally in some examples, including in at least one preferred example, the battery housing further comprises a first surface coating material arranged on the inner surface of the top cover. A technical benefit may include that a complement to the top cover may be provided. A first surface coating material may be chosen that can withstand e.g. elevated temperatures and radiation.

Optionally in some examples, including in at least one preferred example, the first surface coating comprises a heat resistive material property.

Optionally in some examples, including in at least one preferred example, the first surface coating material comprises a silicate mineral or a thermally resistive plastic material.

Optionally in some examples, including in at least one preferred example, the first surface coating material is formed by mica. Mica should be construed as a group of silicate minerals, where individual mica crystals can be split into thin elastic plates. A technical benefit may include that mica may have a high thermal stability. In particular, the structural integrity and insulating properties may be maintained even when exposed to elevated temperatures caused by e.g. thermal runaway. Also, mica may be formed with high flexibility and formability. In detail, mica sheets can be fabricated into various shapes and sizes, which allows for customized applications fitting specific design requirements of battery packs. In particular, mica may hereby be formed on the inner surface of the top cover between the elongated spacer element(s).

Optionally in some examples, including in at least one preferred example, the battery housing further comprises a second surface coating material arranged on the elongated spacer element. A technical benefit may include that a complement to the elongated spacer element may be provided. A second surface coating material may be chosen that can withstand e.g. elevated temperatures and radiation.

Optionally in some examples, including in at least one preferred example, the second surface coating material is arranged on a first surface of the elongated spacer element facing one of the pair of battery cells, and on a second surface of the elongated spacer element facing the other one of the pair of battery cells.

Optionally in some examples, including in at least one preferred example, the second surface coating material is a compressible material. A technical benefit may include that the compressible material may compensate for thermal strains and stresses between battery cells when the temperature increases in the battery pack. Also, outer housing walls may be exposed to lower stresses caused by increase in cell temperatures, as the compressible material may absorb such loads. Hence, a reduced risk of housing deformation may be obtained.

Optionally in some examples, including in at least one preferred example, the compressible material comprises aerogel. A technical benefit may include that aerogel may provide improved thermal insulation between the battery cells. Hereby, a desirable temperature range within the battery pack may be obtained, thereby reducing the risk of overheating and improving the overall efficiency and lifespan of the battery cells. Aerogel thus has a low thermal conductivity. In addition, aerogel is lightweight due to its relatively high porosity. A further technical benefit may include that the aerogel may have fire retardant properties which can make it suitable for battery housing applications, and in particular for improving the battery housing in case of thermal runaway.

Optionally in some examples, including in at least one preferred example, each of the battery cells comprises an upper surface facing the inner surface of the top cover, the upper surface comprises a portion with reduced mechanical strength compared to remaining portions of the upper surface. A technical benefit may include that thermal runaway in a battery cell can be controlled. In particular, since the portion comprises a reduced mechanical strength, it may be more or less certain that the particles and radiation will be exhausted through this portion in the event of thermal runaway.

According to a second aspect, there is provided a vehicle comprising the battery housing according to any of the examples described above in relation to the first aspect.

Effects and features of the second aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary exploded illustration of a battery housing comprising a plurality of battery cells according to an example,
Fig. 3 is an exemplary illustration of the battery housing in Fig. 2 in an assembled configuration according to an example, and
Figs. 4A-4B are exemplary cross sectional illustrations of the battery housing and the battery cells according to an example.

### DETAILED DESCRIPTION

The detailed description set forth below provides information and examples of the disclosed technology with sufficient detail to enable those skilled in the art to practice the disclosure.

The disclosure described in the following aims at reducing damages in a battery pack when one of the battery cells is exposed to thermal runaway. A technical benefit may include that the battery cells are more or less isolated from each other by the below described elongated spacer element that extends to the inner surface of the top cover.

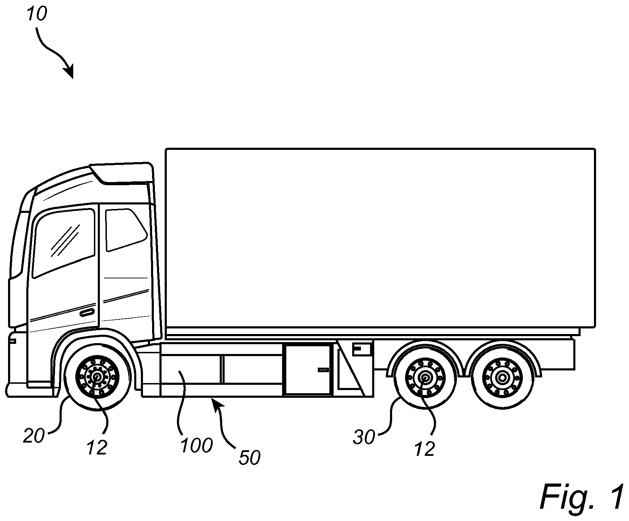

With reference to Fig. 1, which is an exemplary illustration of a vehicle 10 according to an example. The exemplified vehicle 10 is configured to be at least partly propelled by one or more electric traction motors 12. The electric traction motors 12 are in Fig. 1 exemplified as wheel hub motors connected to the pair of front wheels 20 as well as to the foremost pair of rear wheels 30. However, the vehicle 10 may alternatively comprises a single electric traction motor connected to the wheels via a conventional propulsion shaft (not shown). The at least one electric traction motor 12 is configured to apply a propulsive power to the wheels of the vehicle during propulsion, and to generate electric power during braking. The vehicle 10 may alternatively be propelled by the electric traction motor 12 in combination with a conventional internal combustion engine, i.e. a so-called hybrid vehicle.

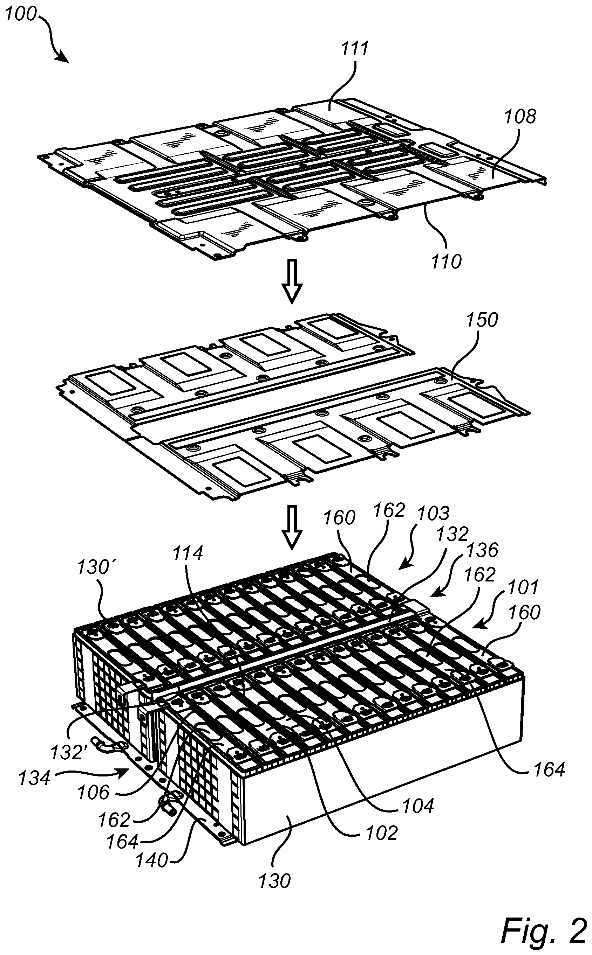

The vehicle 10 also comprises an energy storage arrangement 50, which may also be referred to as a high-voltage battery. As will be described in further detail below, the energy storage arrangement 50 comprises a battery housing 100 accommodating at least one pair of battery cells. In order to describe the battery housing in further detail, reference is now made to Fig. 2, which is an exemplary exploded illustration of a battery housing comprising a plurality of battery cells according to an example. The battery housing may also potentially be applied to stationary implementations, e.g. used in a stationary unit such as a building and/or any stationary machinery.

As can be seen in Fig. 2, the battery housing 100 comprises at least one pair of batter cells 102, 104. In particular, the exemplification depicted in Fig. 2 comprises a plurality of battery cells arranged in a first row 101 of battery cells and a second row of battery cells 103. The battery cells 102, 104 are arranged side by side with each other along the respective first 101 and second 103 rows of battery cells. Although not illustrated in Fig. 2, the battery housing 100 may alternatively accommodate a single row of battery cells, or more than two rows of battery cells.

The battery housing 100 exemplified in Fig. 2 further comprises a first side wall 130 and a second side wall 132. Each of the battery cells in the first row 101 of battery cells may extend between the first 130 and second 132 side walls. The exemplified battery housing 100 in Fig. 2 with a second row 103 of battery cells may additionally comprises an additional first side wall 130' and an additional second side wall 132'. In a similar vein as the first row 101 of battery cells, the battery cells arranged in the second row 103 of battery cells may extend between the additional first side wall 130' and the additional second side wall 132'. Hence, the first side wall 130 and the additional first side wall 130' are exemplified as outer side walls of the battery housing 100, while the second side wall 132 and the additional second side wall 132' are arranged as internal side walls. In further detail, the second side wall 132 and the additional second side wall 132' are arranged between the battery cells in the first 101 and second 103 rows of battery cells. The battery housing also comprises a third side wall 134 and a fourth side wall 136. The third side wall 134 may also be referred to as a front side wall and the fourth side wall 136 may be referred to as a rear side wall. The third 134 and fourth 136 side walls may extend between the first 130 and second 132 side walls, or between the first side wall 130 and the additional first side wall 130'.

The battery housing 100 may also comprise a floor 140. The plurality of battery cells may be arranged on the floor 140, or connected to the floor 140 via an intermediate structure (not shown). The floor 140 may thus also be seen as a bottom surface of the battery housing 100. As depicted in Fig. 2, the battery housing 100 also comprises a top cover 108. The top cover 108 comprises an inner surface 110 and an outer surface 111, where the inner surface 110 is facing in a direction towards the battery cells 102, 104, while the outer surface 111 is facing in a direction away from the battery cells 102, 104. The top cover 110 is preferably made by a metal material, such as e.g. steel.

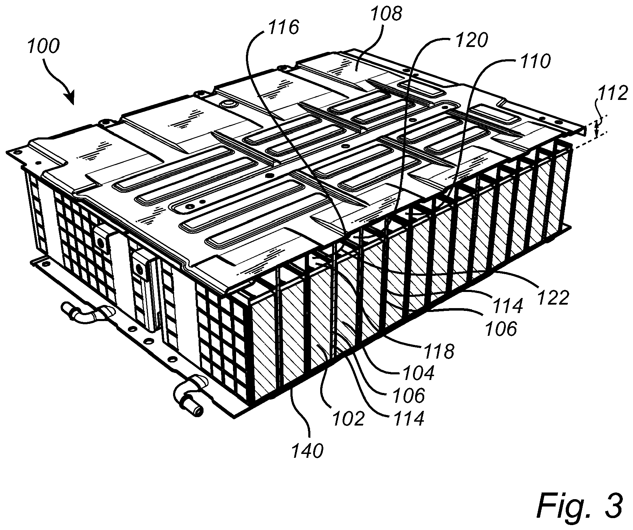

Furthermore, the battery housing 100 exemplified in Fig. 2 may comprise a first surface coating material 150. For simplifying the illustration for the skilled reader, the first surface coating material 150 is depicted as a structural element. The first surface coating material 150 is, in the assembled configuration depicted and described in further detail with reference to Fig. 3, arranged on the inner surface 110 of the top cover 108. The first surface coating material 150 may comprise a heat resistive material property. Thus, the first surface coating material 150 may hereby be able to withstand relatively elevated temperature levels. According to a non-limiting example, the first surface coating material 150 may comprise a silicate mineral. The silicate mineral may be formed by mica. As an alternative, the first surface coating material 150 may comprise a thermally resistive plastic material.

Turning back to the battery cells 102, 104. As can be seen in Fig. 2, each of the battery cells 102, 104 may comprise an upper surface 160 which faces in the direction towards the inner surface 110 of the top cover 108. The upper surface 160 of the battery cells 102, 104 comprises a portion 162 with reduced mechanical strength compared to remaining portions 164 of the upper surface 160. The portion 162 with reduced mechanical strength may, as an example, comprises a thinner layer of material compared to the remaining portions 164 of the upper surface 160. Hereby, in the event of thermal runaway, particles and radiation from the battery cell 102, 104 is controlled to be exhausted at the portion 162 with reduced mechanical strength as this portion 162 will brake before the remaining portions 164.

Furthermore, and as indicated above, the battery cells 102, 104 are arranged side by side with each other, along the first side wall 130 of the housing. Hence, the battery cells 102, 104 are arranged side by side with each other along the first 101 and second 103 rows of battery cells. In addition, the battery cells 102, 104 are spaced apart from each other by a geometric gap 106, in which an elongated spacer element 114 is positioned. In order to describe the elongated spacer element 114 in further detail, reference is made to Fig. 3 which is an exemplary illustration of the battery housing 100 in Fig. 2 in an assembled configuration according to an example. In the example depicted in Fig. 3, the first side wall 130 has been excluded to simplify for the skilled reader.

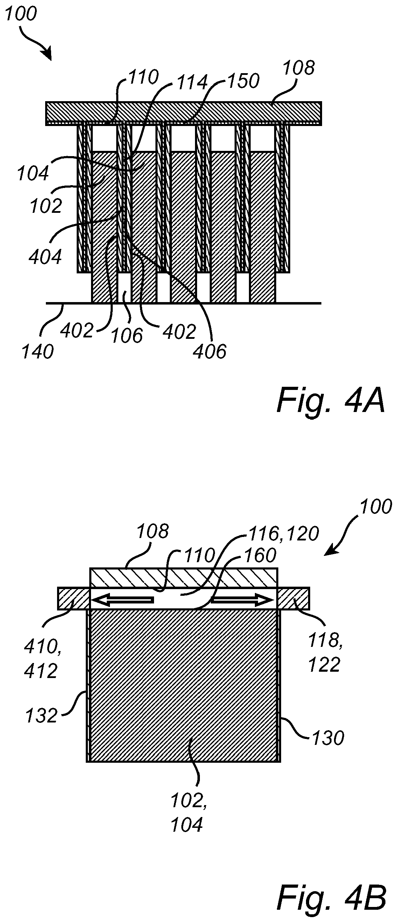

As can be seen in Fig. 3, the inner surface 110 of the top cover 108 is arranged at a distance 112 from the battery cells 102, 104. Also, the above described elongated spacer element 114 extends from the inner surface 110 of the top cover 108 and into the geometric gap 106 arranged between the pair of battery cells 102, 104. The elongated spacer element 114 is in the exemplification of Fig. 3 extending from the inner surface 110 of the top cover 108 to the floor 140. As will be evident from the below description and illustrated in Fig. 4A, the elongated spacer element 114 must not extend all the way to the floor 140, but can rather extend from the inner surface 110 of the top cover 108 to a position arranged at a non-zero distance from the floor 140. By means of the elongated spacer element 114 and the top cover 108 arranged at a distance from the battery cells 102, 104, a first ventilation channel 116 is formed between the upper surface 160 of the battery cells and the inner surface 110 of the top cover 108. The first ventilation channel 116 is a ventilation channel for the first battery cell 102. In addition, also a second ventilation channel 120 may be formed and which is a ventilation channel for the second battery cell 104. In particular, the second ventilation channel 120 is also formed by the elongated spacer element 114 and the top cover 108 arranged at a distance from the battery cells 102, 104. The first 116 and second 120 ventilation channels are thus arranged on opposite sides of the elongated spacer element 114. The spacer element 114 may be made by a metal material, such as e.g. steel.

In the example depicted in Fig. 3, the battery housing 100 comprises a plurality of battery cells 102, 104 and a plurality of elongated spacer elements 114, where an elongated spacer 114 is arranged between a pair of battery cells 102, 104. In the exemplification, two adjacent elongated spacer elements in combination with the top cover 108 may form the first ventilation channel 116, while two adjacent elongated spacer elements in combination with the top cover 108 may form the second ventilation channel 120, where the first 116 and second 120 ventilation channels share one elongated spacer element 114.

The first ventilation channel 116 further comprises a first outlet 118 in the housing 100. The first outlet 118 will be exemplified in further detail below with reference to Figs. 4A and 4B. The first outlet 118 is arranged towards the ambient environment. In a similar vein, the second ventilation channel 120 may preferably comprise a second outlet 122 in the housing 100 towards the ambient environment. In the example depicted in Fig. 3, as well as in Fig. 2, with the first 101 and second 103 rows of battery cells, the first ventilation channel 116 comprises a single first outlet 118 towards the ambient environment. The same applies for the second ventilation channel 120. The first 118 and second 122 ventilation channels are hereby arranged in the first side wall 130 of the battery housing 100. However, and as will be evident with the description of Fig. 4B below, the first ventilation channel 116 may comprise an additional first outlet at the second side wall when the battery housing 100 comprises solely a single row of battery cells. In a similar vein, the second ventilation channel 120 may comprise an additional second outlet at the second side wall when the battery housing 100 comprises solely a single row of battery cells.

Reference is now made to Figs. 4A and 4B, which are exemplary cross sectional illustrations of the battery housing 100 and the battery cells 102, 104 according to an example. In particular, Fig. 4A is a side view cross section seen from the first side wall 130 and Fig. 4B is a side view cross section seen from the third side wall 134. The exemplified battery housing 100 in Figs. 4A and 4B comprises one single row of battery cells. The features described in the following, except the additional first outlet should however be construed as applicable for the example including a first 101 and second 103 rows of battery cells as depicted in Figs. 2 and 3.

As can be seen in Fig. 4A, the elongated spacer element 114 extends from the inner surface 110 of the top cover 108 as also described above. The top cover 108 and the elongated spacer element 114 may be formed in one piece and made by the same material, such as the above indicated metal material. As such, the first surface coating material 150 is arranged on the inner surface 110 of the top cover 108 at the area between the elongated spacer elements 114. As mentioned above, and illustrated in Fig. 4A, the elongated spacer element 114 does not extend all the way to the floor 140.

As also illustrated in Fig. 4A, the battery housing 100 further comprises a second surface coating material 402. The second surface coating material 402 is arranged on the elongated spacer element 114. In particular, the second surface coating material 402 may be arranged on a first surface 404 as well as on a second surface 406 of the elongated spacer element 114, where the first surface 404 faces the first battery cell 102 and the second surface 406 faces the second battery cell 104. Hence, the second surface coating material 402 is arranged on both sides of the elongated spacer element 114. The second surface coating material 402 may hereby be arranged in abutment with the respective first 102 and second 104 battery cells. The second surface coating material 402 may be a compressible material. Hence, when the first 102 and/or second 104 battery cell is exposed to thermal expansion, the second surface coating material 402 may be able to absorb the generated stresses and deform such that e.g. the entire battery housing is exposed to less stresses and strains. The compressible material of the second surface coating material 402 may comprise an aerogel.

In the example depicted in Fig. 4A, the elongated spacer element 114, as well as the second surface coating material 402 do not extend all the way to the floor 140, but should of course also be able to do so.

Furthermore, and with particular reference to Fig. 4B, the battery cells 102, 104 extend from the first side wall 130 to the second side wall 132. Although not depicted in Fig. 4B, the elongated spacer element 114 as well as the second surface coating material 402 may also extend from the first side wall 130 to the second side wall 132. The battery cells 102, 104 may, but not necessarily, be arranged in abutment with the first 130 and second 132 side walls. The elongated spacer element 114 as well as the second surface coating material 402 may be connected to, or arranged in attachment with, the first 130 and second 132 side walls. As such, the above described first 116 and second 120 ventilation channels can be sealed from each other. In detail, there may be no fluid communication between the first and second ventilation channels.

As further depicted in Fig. 4B, the first outlet 118 of the first ventilation channel 116 is arranged in the first side wall 130. As described above, the battery housing 100 in Fig. 4B comprises a single row of battery cells 102, 104. The first ventilation channel 116 may here comprise the additional first outlet 410 which is arranged in the second side wall 132. In a similar vein, the second ventilation channel 120 may comprise the additional second outlet 412 which is also arranged in the second side wall 132. Further, Fig. 4B also clearly illustrates that the first 116 and second 120 ventilation channels are arranged at the space formed by the upper surface 160 of the battery cells 102, 104, the inner surface 110 of the top cover 108, and the elongated spacer element 114.

### EXAMPLE LIST

Example 1. A battery housing, comprising: at least one pair of battery cells, the battery cells being arranged side by side and spaced apart from each other by a geometric gap, a top cover having an inner surface facing in a direction towards the battery cells, the inner surface being arranged at a distance from the at least one pair of battery cells, and an elongated spacer element extending from the inner surface of the top cover and into the geometric gap between the battery cells, wherein a first ventilation channel is formed by the spacer element and the top cover, the first ventilation channel comprising a first outlet in the housing towards an ambient environment.

Example 2. The battery housing of example 1, wherein the battery housing comprises a second ventilation channel formed by the spacer element and the top cover, the first and second ventilation channels being arranged on opposite sides of the spacer element.

Example 3. The battery housing of example 2, wherein the second ventilation channel comprises a second outlet in the housing towards the ambient environment, the second outlet being an outlet different from the first outlet.

Example 4. The battery housing of any one of examples 2 and 3, wherein the first and second ventilation channels are sealed from each other.

Example 5. The battery housing of any one of the preceding examples, wherein the battery housing comprises a first side wall and a second side wall, the elongated spacer element extending from the first side wall to the second side wall.

Example 6. The battery housing of example 5, wherein the first outlet is arranged in the first side wall.

Example 7. The battery housing of example 6, wherein the first ventilation channel comprises an additional first outlet arranged in the second side wall.

Example 8. The battery housing of any one of examples 5-7, wherein each of the battery cells extends between the first and second side walls.

Example 9. The battery housing of any one of the preceding examples, wherein the top cover and the elongated spacer element are formed in one piece and made by same type of material.

Example 10. The battery housing of any one of the preceding examples, wherein the top cover is made by a metal material.

Example 11. The battery housing of any one of the preceding examples, wherein the spacer element is made by a metal material.

Example 12. The battery housing of any one of the preceding examples, wherein the battery housing further comprises a first surface coating material arranged on the inner surface of the top cover.

Example 13. The battery housing of example 12, wherein the first surface coating comprises a heat resistive material property.

Example 14. The battery housing of any one of examples 12 or 13, wherein the first surface coating material comprises a silicate mineral or a thermally resistive plastic material.

Example 15. The battery housing of example 14, wherein the first surface coating material is formed by mica.

Example 16. The battery housing of any one of the preceding examples, wherein the battery housing further comprises a second surface coating material arranged on the elongated spacer element.

Example 17. The battery housing of example 16, wherein the second surface coating material is arranged on a first surface of the elongated spacer element facing one of the pair of battery cells, and on a second surface of the elongated spacer element facing the other one of the pair of battery cells.

Example 18. The battery housing of any one of examples 16 or 17, wherein the second surface coating material is a compressible material.

Example 19. The battery housing of example 18, wherein the compressible material comprises aerogel.

Example 20. The battery housing of any one of the preceding examples, wherein each of the battery cells comprises an upper surface facing the inner surface of the top cover, the upper surface comprises a portion with reduced mechanical strength compared to remaining portions of the upper surface.

Example 21. A vehicle comprising the battery housing according to any of examples 1 - 20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery housing (100), comprising:
at least one pair of battery cells (102, 104), the battery cells being arranged side by side and spaced apart from each other by a geometric gap (106),
a top cover (108) having an inner surface (110) facing in a direction towards the battery cells (102, 104), the inner surface being arranged at a distance (112) from the at least one pair of battery cells, and
an elongated spacer element (114) extending from the inner surface (110) of the top cover (108) and into the geometric gap (106) between the battery cells, wherein a first ventilation channel (116) is formed by the spacer element and the top cover, the first ventilation channel (116) comprising a first outlet (118) in the housing (100) towards an ambient environment.

2. The battery housing of claim 1, wherein the battery housing comprises a second ventilation channel (120) formed by the spacer element (114) and the top cover (108), the first (118) and second (120) ventilation channels being arranged on opposite sides of the spacer element (114).

3. The battery housing of claim 2, wherein the second ventilation channel (120) comprises a second outlet (122) in the housing towards the ambient environment, the second outlet being an outlet different from the first outlet.

4. The battery housing of any one of claims 2 and 3, wherein the first (116) and second (120) ventilation channels are sealed from each other.

5. The battery housing of any one of the preceding claims, wherein the battery housing comprises a first side wall (130) and a second side wall (132), the elongated spacer element (114) extending from the first side wall to the second side wall.

6. The battery housing of claim 5, wherein the first outlet (118) is arranged in the first side wall (130).

7. The battery housing of any one of claims 5-6, wherein each of the battery cells extends between the first and second side walls.

8. The battery housing of any one of the preceding claims, wherein the top cover (108) and the elongated spacer element (114) are formed in one piece and made by same type of material.

9. The battery housing of any one of the preceding claims, wherein the battery housing further comprises a first surface coating material (150) arranged on the inner surface (110) of the top cover (108), wherein the first surface coating material comprises a heat resistive material property.

10. The battery housing of claim 9, wherein the first surface coating material (150) comprises a silicate mineral or a thermally resistive plastic material.

11. The battery housing of claim 10, wherein the first surface coating material (150) is formed by mica.

12. The battery housing of any one of the preceding claims, wherein the battery housing further comprises a second surface coating material (402) arranged on the elongated spacer element (114).

13. The battery housing of claim 12, wherein the second surface coating material (402) is arranged on a first surface of the elongated spacer element facing one of the pair of battery cells, and on a second surface of the elongated spacer element facing the other one of the pair of battery cells, wherein the second surface coating material is a compressible material.

14. The battery housing of claim 13, wherein the compressible material comprises aerogel.

15. A vehicle (10) comprising the battery housing according to any of claims 1 - 14.
